# EUROPEAN PATENT SPECIFICATION

(11) **EP 3 562 004 B1**
(45) Date of publication and mention of the grant of the patent: **11.05.2022**
(21) Application number: 18169150.2
(22) Date of filing: 25.04.2018
(51) Int. Cl.: H02K 11/25, H02K 3/50

(54) **ISOLATION RING FOR ISOLATING END WINDINGS OF A STARTER GENERATOR FOR A HYBRID ELECTRIC VEHICLE**
ISOLATIONSRING ZUR ISOLIERUNG VON ENDWICKLUNGEN EINES STATORGENERATORS FÜR EIN HYBRIDES ELEKTROFAHRZEUG
ANNEAU D'ISOLATION PERMETTANT D'ISOLER DES ENROULEMENTS D'EXTRÉMITÉ D'UN STATOR GÉNÉRATEUR DESTINÉ À UN VÉHICULE ÉLECTRIQUE HYBRIDE

(43) Date of publication of application: 30.10.2019
(73) Proprietor: Vitesco Technologies GmbH, 93055 Regensburg (DE)
(72) Inventor: Bhat, Uday, 93426 Roding (DE); Eltner, Frank, 13125 Berlin (DE); Dmitrasinovic, Zoran, 14055 Berlin (DE); Beer, Anton, 93426 Roding (DE); Kohlstrunk, Johannes, 10715 Berlin (DE)
(74) Representative: Vitesco Technologies

(56) References cited:
- DE-A1-102016 219 221
- FR-A1- 3 046 505
- JP-A- 2012 057 980
- JP-A- 2013 051 807
- JP-B2- 5 693 686

## Description

The inventions concerns to an isolation ring for isolating the end windings of a stator of an electrical machine, comprising a support for arranging a temperature sensor. Hence an accurate temperature detection of the coil winding can be achieved. Preferably, the electrical machine relates to a belt starter generator of a hybrid electric vehicle.

In a rotating electric machine, a coil winding is provided on a stator or a rotor. An electric current flows to the coil winding, when the rotating electric machine is driven. As a result, a conductor of the coil winding generates heat based on the electrical resistance of the conductor, and then the temperature of the coil winding rises. Inside a 48V electrical machine, the temperature can rise as high as 180°C. Therefore, it is important to measure and/or detect the precise temperature for safe functioning of the electrical machine respectively the generator.

US 2014/0191629 A1 describes a stator, wherein the stator includes a stator core, a winding and a temperature sensor. In the stator core, a plurality of slots are formed in a circumferential direction of the stator. The winding is formed by a plurality of conductors which are housed in the slots and are electrically connected. The slots are formed such that a predetermined number of the conductors are housed and arrayed in a radial direction of the stator. The temperature sensor is located in at least one of the slots and detects temperature of the conductors. Since the temperature sensor is arranged in the slot it is necessary that the sensor is reliably in contact with the conductor. Otherwise, an accurate measurement of the temperature cannot be achieved. Furthermore, the arrangement of the temperature sensor in the slots is time and cost intensive.

JP 5 693 686 B2 describes a rotary electric machine having a connection plate with a holder for receiving a temperature sensor A sensor holder of the holder comprises an elastic portion for abutting the temperature sensor against a coil wire end.

DE 10 2016 219 221 A1 describes a stator and a method for producing an electrical connection of the stator.

FR 3 046 505 A1 describes a stator for electrical machine, wherein an isolation ring comprises a protrusion having a pocket for inserting a temperature sensor. The temperature sensor is arranged or respectively directed into the protrusion in radial direction of the isolation ring. The temperature sensor is pressed by a cover to the conductor guide.

JP 2013 051 807 A and JP 2012 057 980 A describe the arrangement of a temperature sensor to a conductor via a strap.

It is an object of the present invention to provide means for an accurate temperature detection of the end windings of a stator.

This object is achieved by the subject matter of independent claim 1. Preferred embodiments of the invention are subject matter of the dependent claims or described hereinafter.

According to the subject matter of the invention, an isolation ring for isolating the end windings of a stator of an electrical machine is provided, comprising
a protrusion with an insertion opening and a conductor guide, wherein an end of an electrical conductor is insertable through the insertion opening into the conductor guide, wherein the protrusion comprises a flexible arm with a sensor seat on an inner side of the flexible arm facing the conductor guide, and the flexible arm is at least partially moveable in a direction of the conductor guide, wherein the isolation ring and the protrusion are designed as one piece,
a temperature sensor arranged in the sensor seat facing the conductor guide, and
a rubber strap arranged around the protrusion in such a way that it exerts a force moving the flexible arm in the direction of the conductor guide, wherein the rubber strap (36) is a heat shrink tube layer (46).

In other words, it is an aspect of the present invention that an isolation ring for isolating the end windings of a stator of an electrical machine is provided, wherein the electrical machine is preferably a starter generator of a hybrid electric vehicle. The isolation ring comprises a protrusion with an insertion opening and a conductor guide for receiving an electrical conductor of the windings, wherein the electrical conductor is preferably a neutral bridge. Hence, the electrical conductor is insertable into the conductor guide via the insertion opening. It has been found out that the neutral bridge is one of the hottest area of the electrical machine. Therefore, the temperature should be measured at the neutral bridge.

The isolation ring and the protrusion are designed as one piece. The protrusion comprises a flexible arm with a sensor seat on an inner side of the flexible arm facing the conductor guide. A temperature sensor is arranged in the sensor seat facing the conductor guide. Furthermore, the flexible arm is at least partially moveable in a direction of the conductor guide.

A rubber strap is arranged around the protrusion in such a way that it exerts a force moving the flexible arm in the direction of the conductor guide. Hence, when the electrical conductor is inserted in the conductor guide, the temperature sensor can be pressed against the electrical conductor self-adjustingly by the pressing force of the rubber strap. Thus, a mean for an accurate and reliable temperature detection of the end windings of a stator is provided. According to the invention, the rubber strap is a heat shrink tube layer. Hence, the tube layer can be easily imposed on the protrusion at least partially surround the flexible arm.

Usually, the guiding direction of the conductor guide corresponds to the axial direction of the isolation ring. In a preferred embodiment of the invention, the protrusion is directed in axial direction of the isolation ring. Hence, the electrical conductor is insertable in axial direction of the isolation ring into the conductor guide via the insertion opening.

According to a preferred embodiment of the invention, the flexible arm is moveable in a direction perpendicular to the insertion direction of the electrical conductor into the conductor guide. Hence, the temperature sensor arranged in the sensor seat can be pressed against a longitudinal side of the electrical conductor. Thus, the temperature sensor can be reliably connected to and/or pressed against the electrical connector.

The conductor guide is arranged and/or configured in such a way, that it can guide the electrical conductor inserted in the conductor guide. In a preferred embodiment of the invention, the conductor guide is formed as a slot. Hence, the electrical conductor can be securely guided and positioned in the conductor guide.

According to a preferred embodiment of the invention, the flexible arm is designed in a wall of the protrusion at least partially enclosing the conductor guide. Hence, the wall of the protrusion surrounds the conductor guide at least partially and the flexible arm is designed and/or formed in the wall of the protrusion. Thus, the protrusion comprising the flexible arm can be designed as a single piece.

In a preferred embodiment of the invention, the wall of the protrusion comprises a U-shaped recess, wherein the flexible arm is formed between the longitudinal arms of the U-shaped recess. Hence, the flexible arm is linked with one end to the wall of the protrusion. Thus, the flexible arm can be easily designed and formed in the protrusion, reducing the manufacturing costs of the isolation ring.

The sensor seat facing the conductor guide comprises a seat surface. The plane of the seat surface can be arranged parallel to the guiding direction of the conductor guide for inserting the electrical conductor in the conductor guide. Hence, the plane of the seat surface is basically parallel to the electrical conductor arranged in the conductor guide. The temperature sensor arranged in the sensor seat sits on the seat surface.

According to a preferred embodiment of the invention, the sensor seat facing the conductor guide comprises a seat surface, which is inclined with respect to the insertion direction of the electrical conductor into the conductor guide respectively with respect to the axial direction of the conductor guide. The temperature sensor is arranged in the sensor seat sitting on the seat surface. Hence, due to the inclined seat surface the bend angle of the flexible arm, when pressing against the electrical conductor, can be compensated. Thus, the temperature sensor can be arranged basically parallel to the longitudinal direction of the electrical conductor when positioned in the conductor guide. Hence, the contact surface of the temperature between the temperature surface and the electrical conductor can be increased.

In a preferred embodiment of the invention, the temperature sensor is arranged in the sensor seat by a form-fit connection, a force-fit connection and/or is firmly bonded to the sensor seat. Preferably, the temperature sensor is firmly placed in the sensor seat by an epoxy or resin. Hence, the robustness of the sensor arrangement in the sensor seat and the resistance against vibrations of the conductor can be increased, since the temperature sensor sits firmly in the sensor seat. Furthermore, the isolation ring, including the temperature sensor can be easily and comfortably pre-manufactured. Thus, production cost can be decreased.

According to a preferred embodiment of the invention, the structural height of the temperature sensor is larger than the depth of the sensor seat in a direction perpendicular to the guiding direction of the conductor guide. Hence, when the temperature sensor is arranged in the sensor seat, the temperature sensor slightly overlaps the sensor seat in a direction perpendicular to the guiding direction of the conductor guide. Thus, when the flexible arm is moved in direction of the conductor guide, an upper surface of the temperature sensor facing the conductor guide respectively the electrical conductor, which is arranged in the conductor guide, can contact the electrical conductor reliably.

In a preferred embodiment of the invention, the protrusion comprises a first recess and a second recess. The first recess and the second recess might be arranged in the wall of the protrusion. According to a preferred embodiment, the first recess and the second recess are arranged in the protrusion at its distal end in axial direction of the isolation ring. Hence, sensor pins can be inserted via the first recess and the second recess for connecting with sensor wires of the temperature sensor. Thus, the temperature sensor can be comfortably and easily connected.

The rubber strap arranged around the protrusion and exerting a force on the flexible arm for moving the flexible arm in the direction of the conductor guide can comprise an elastic material, especially a rubber material. The tube layer can be easily imposed on the protrusion at least partially surround the flexible arm. After the electrical conductor is inserted via the insertion opening into the conductor guide, the tube layer is heated. By heating the tube layer, the diameter of the tube layer is shrunk. Hence, the tube layer exerts a force on the flexible arm moving it in direction of the conductor guide pressing the temperature sensor against the electrical conductor. Hence, the temperature sensor can be easily and reliably pressed against the electrical conductor.

Preferably, the isolation ring and the protrusion are made of an insulating material, especially plastic. Hence, the isolation ring comprising the protrusion can be comfortably produced by molding in a molding tool. Thus, production cost can be decreased.

The invention further concerns to an electrical machine with a stator comprising end windings with at least one electrical conductor, wherein
an isolation ring according to the invention is arranged on the end windings,
the end of the electrical conductor is guided in the conductor guide, and
the rubber strap arranged around the protrusion exerts a force moving the flexible arm in the direction of the conductor guide pressing the temperature sensor against the electrical conductor.

These and other aspects of the invention will be apparent from and elucidated with reference to the embodiments as per the drawings described hereinafter. In the following description, exemplary embodiments of the invention are explained with reference to the accompanying schematic drawing.
- Fig. 1: shows an isolation ring with a protrusion,
- Fig. 2: shows a detailed view of the protrusion,
- Fig. 3: shows a schematic view of a longitudinal section through the protrusion with a conductor inserted in a conductor guide of the protrusion,
- Fig. 4: shows a detailed view of the protrusion focusing on the design of the flexible arm of the protrusion,
- Fig. 5: shows a detailed view of the protrusion with a temperature sensor in the sensor seat of the flexible arm,
- Fig. 6: shows a detailed view of the protrusion showing connecting pins for electrically connecting the temperature sensor,
- Fig. 7: shows a detailed view of the protrusion showing the rubber strap as a heat shrink tube layer,
- Fig. 8: shows a cross sectional view through the protrusion.

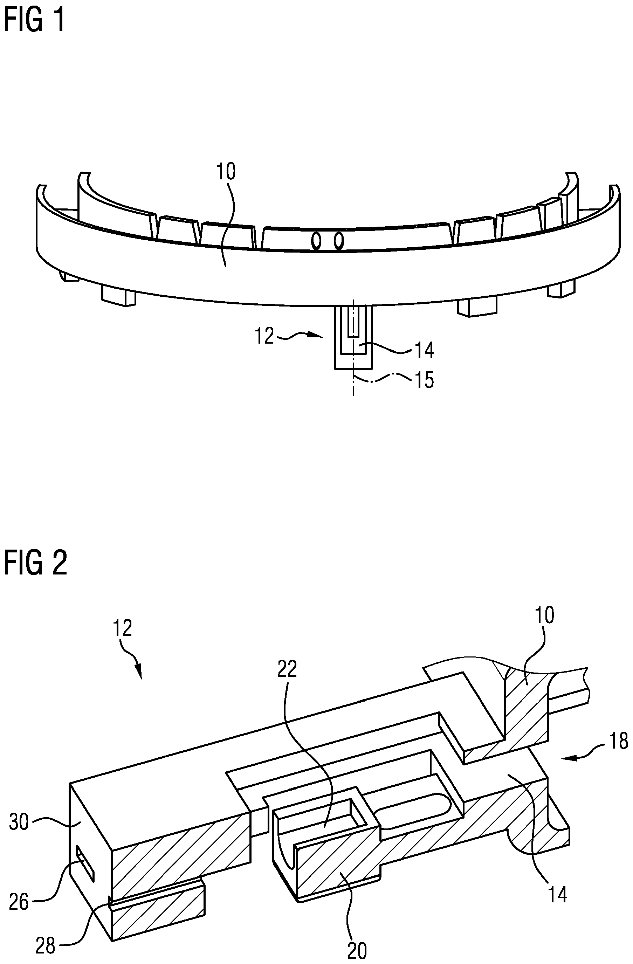

Fig. 1 shows an isolation ring 10 for isolating end windings of a stator of an electrical machine (not shown). Preferably, the electrical machine is a 48V starter generator of a hybrid electric vehicle. The isolation ring 10 comprising at least a protrusion 12 with a conductor guide 14 for receiving an electrical conductor 16 of the windings, wherein the electrical conductor 16 is preferably a neutral bridge. It has been found out that the neutral bridge is one of the hottest area of the electrical machine. Therefore, the temperature is measured at the neutral bridge.

The guiding direction of the conductor guide 14 corresponds to the axial direction 15 of the isolation ring 10. The protrusion 12 is directed in axial direction of the isolation ring 10. Hence, the electrical conductor 16 is insertable in axial direction of the isolation ring 10 into the conductor guide 14.

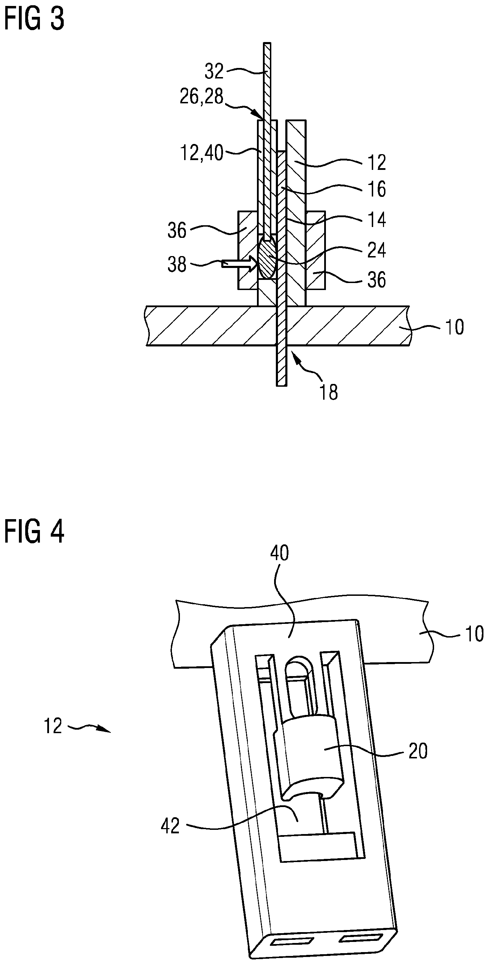

A detailed view of the protrusion 12 is shown in Fig. 2. The protrusion 12 comprises an insertion opening 18 and the conductor guide 14 for receiving the electrical conductor 16 of the windings. Hence, the electrical conductor 16 is insertable into the conductor guide 14 via the insertion opening 18 as shown in Fig. 3.

The protrusion 12 comprises a flexible arm 20 with a sensor seat 22 on an inner side of the flexible arm 20 facing the conductor guide 14. A temperature sensor 24 can be arranged in the sensor seat 22 facing the conductor guide 14. Furthermore, the flexible arm 20 is at least partially moveable in a direction of the conductor guide 14.

The protrusion 12 comprises a first recess 26 and a second recess 28 at its distal end 30 in axial direction 15 of the isolation ring 10. Hence, sensor pins 32 can be inserted via the first recess 26 and the second recess 28 for connecting with sensor wires 34 of the temperature sensor 24. Thus, the temperature sensor 24 can be comfortably and easily connected to the electrical conductor 16.

Fig. 3 shows a schematic view of a longitudinal section through the protrusion 12. The electrical conductor 16 is inserted into the conductor guide 14 of the protrusion 12 via the insertion opening 18.

The temperature sensor 24 is arranged in the sensor seat 22 of the flexible arm 20 facing the electrical conductor 16. Sensor pins 32 are inserted via the first recess 26 and the second recess 28 for electrically connecting with the sensor wires 34 of the temperature sensor 24.

A rubber strap 36 is arranged around the protrusion 12 in such a way that it exerts a force 38, especially a pressing force, moving the flexible arm 20 in the direction of the conductor guide 14. Hence, the temperature sensor 24 is pressed against the electrical conductor 18 arranged in the conductor guide 14 self-adjustingly. Thus, a mean for an accurate and reliable temperature detection of the end windings of a stator is provided.

Fig. 4 shows a detailed view of the protrusion 12, especially the flexible arm 20. The flexible arm 20 is designed in a wall 40 of the protrusion 12 at least partially enclosing the conductor guide 14. Hence, the wall 40 of the protrusion surrounds the conductor guide 14 at least partially and the flexible arm 20 is designed and/or formed in the wall 40 of the protrusion 12.

The wall 40 of the protrusion 12 comprises a U-shaped recess 42, wherein the flexible arm 20 is formed between the longitudinal arms of the U-shaped recess 42. Hence, the flexible arm 20 is linked with one end to the wall 40 of the protrusion 12. Thus, the flexible arm 20 can be easily designed and formed in the protrusion 12 reducing the manufacturing costs of the isolation ring 10. Due to the fact that the flexible arm 20 is linked only with one end respectively with one side to the wall 40 of the protrusion 12, the flexible arm 20 is bendable in the direction of the conductor guide 14.

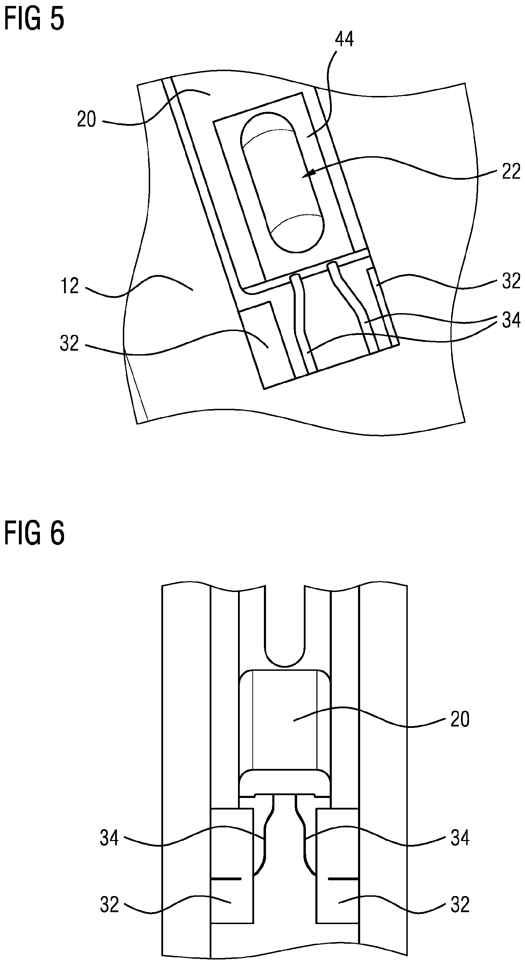

Fig. 5 shows a detailed view of the protrusion 12, especially of the temperature sensor 24 arranged in the sensor seat 22. The temperature sensor 24 is firmly bonded 44 to the sensor seat 22 by an epoxy or resin. Hence, the robustness of the sensor arrangement in the sensor seat 22 and its resistance against vibrations of the electrical conductor 16 can be increased, since the temperature sensor 24 sits firmly in the sensor seat 22. Furthermore, the isolation ring 10, including the temperature sensor 24 can be easily and comfortably pre-manufactured. Thus, production costs can be decreased.

Fig. 6 shows a detailed view of the protrusion 12 showing the electrical connection of the sensor wires 34 of the temperature sensor 24 with the sensor pins 32 inserted through the first recess 26 and the second recess 28.

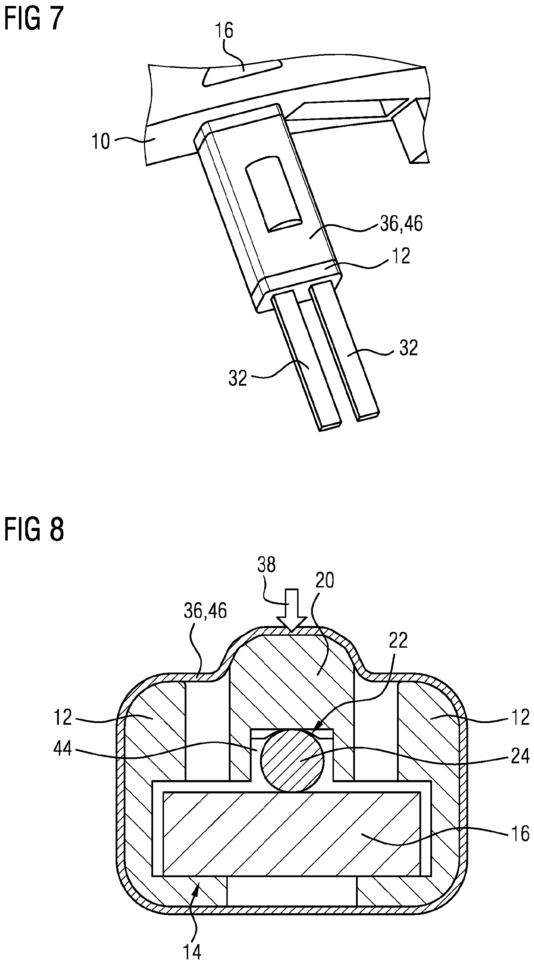

Fig. 7 shows a detailed view of the protrusion 12, wherein the rubber strap 36 is configured as a heat shrink tube layer 46. Hence, the tube layer 46 can be easily imposed on the protrusion 12 at least partially surrounding the flexible arm 20. After the electrical conductor 16 is inserted into the conductor guide 14 via the insertion opening 18, the tube layer 46 is heated. By heating the tube layer 46, the diameter of the tube layer 46 is shrunk. Hence, the tube layer 46 exerts a force on the flexible arm 20, moving it in direction of the conductor guide 14, pressing the temperature sensor 24 against the electrical conductor 16.

Hence, the temperature sensor can be easily and reliably pressed against the electrical conductor 16.

Fig. 8 shows a cross sectional view of the protrusion 12, wherein the electrical conductor 16 is arranged in the conductor guide 14. The temperature sensor 24 is arranged in the sensor seat 22 of the flexible arm 20. The rubber strap 36, designed as a heat shrinkable tube layer 46, is imposed on the protrusion 12 exerting a force 38 on the flexible arm 20 bending the flexible arm 20 in direction of the conductor guide 14 and pressing the temperature sensor 24 against the electrical conductor 16.

## Claims

1. Isolation ring (10) for isolating the end windings of a stator of an electrical machine, comprising
a protrusion (12) with an insertion opening (18) and a conductor guide (14), wherein an end of an electrical conductor (16) is insertable through the insertion opening (18) into the conductor guide (14), wherein the protrusion (12) comprises a flexible arm (20) with a sensor seat (22) on an inner side of the flexible arm (20) facing the conductor guide (14), and the flexible arm (20) is at least partially moveable in a direction of the conductor guide (14), wherein the isolation ring (10) and the protrusion (12) are designed as one piece,
a temperature sensor (24) arranged in the sensor seat (22) facing the conductor guide (14), and
a rubber strap (36) arranged around the protrusion (12) in such a way that it exerts a force (38) moving the flexible arm (20) in the direction of the conductor guide (14), wherein the rubber strap (36) is a heat shrink tube layer (46).

2. Isolation ring according to claim 1, **characterized in that** the protrusion (12) is directed in axial direction (15) of the isolation ring (10).

3. Isolation ring according to claim 1 or 2, **characterized in that** the flexible arm (20) is moveable in a direction perpendicular to the insertion direction of the electrical conductor (16) into the conductor guide (14).

4. Isolation ring according to one of the previous claims, **characterized in that** the conductor guide (14) is formed as a slot.

5. Isolation ring according to one of the previous claims, **characterized in that** the flexible arm (20) is designed in a wall (40) of the protrusion (12) at least partially enclosing the conductor guide (14).

6. Isolation ring according to claim 5, **characterized in that** the wall (40) of the protrusion comprises a U-shaped recess (42), wherein the flexible arm (20) is formed between the longitudinal arms of the U-shaped recess (42).

7. Isolation ring according to one of the previous claims, **characterized in that** the sensor seat (22) facing the conductor guide (14) comprises a seat surface inclined with respect to the insertion direction of the electrical conductor (16) into the conductor guide (14).

8. Isolation ring according to one of the previous claims, **characterized in that** the temperature sensor (24) is arranged in the sensor seat (22) by a form-fit connection, a force-fit connection and/or is firmly bonded (44) to the sensor seat (22) .

9. Isolation ring according to one of the previous claims, **characterized in that** the height of the temperature sensor (24) is larger than the depth of the sensor seat (22) in a direction perpendicular to the guiding direction of the conductor guide (14) .

10. Isolation ring according to one of the previous claims, characterized the protrusion (12) comprises a first recess (26) and a second recess (28).

11. Isolation ring according to claim 10, **characterized in that** the first recess (26) and the second recess (28) are arranged in the protrusion (12) at its distal end (30) in axial direction of the isolation ring (10).

12. Electrical machine with a stator comprising end windings with at least one electrical conductor (16), wherein
an isolation ring (10) according to one of the preceding claims is arranged on the end windings,
the end of the electrical conductor (16) is guided in the conductor guide (14), and
the rubber strap (36) arranged around the protrusion (12) exerts a force (38) moving the flexible arm (20) in the direction of the conductor guide (14) pressing the temperature sensor (24) against the electrical conductor 16.

## Patentansprüche

1. Isolierring (10) zum Isolieren der Endwindungen eines Stators einer elektrischen Maschine, der Folgendes umfasst
einen Vorsprung (12) mit einer Einstecköffnung (18) und einer Leiterführung (14), wobei ein Ende eines elektrischen Leiters (16) durch die Einstecköffnung (18) in die Leiterführung (14) einsteckbar ist, wobei der Vorsprung (12) einen flexiblen Arm (20) mit einem Sensorsitz (22) auf einer Innenseite des flexiblen Arms (20), der der Leiterführung (14) zugewandt ist, umfasst und der flexible Arm (20) mindestens teilweise in eine Richtung der Leiterführung (14) bewegbar ist, wobei der Isolierring (10) und der Vorsprung (12) als ein Stück ausgestaltet sind,
einen Temperatursensor (24), der im Sensorsitz (22) angeordnet ist, der der Leiterführung (14) zugewandt ist,
und
ein Gummiband (36), das in einer Weise um den Vorsprung (12) angeordnet ist, dass es eine Kraft (38) ausübt und den flexiblen Arm (20) in die Richtung der Leiterführung (14) bewegt, wobei das Gummiband (36) eine Wärmeschrumpfschlauchschicht (46) ist.

2. Isolierring nach Anspruch 1, **dadurch gekennzeichnet, dass** der Vorsprung (12) in die Axialrichtung (15) des Isolierrings (10) gerichtet ist.

3. Isolierring nach Anspruch 1 oder 2, **dadurch gekennzeichnet, dass** der flexible Arm (20) in eine Richtung senkrecht zur Einsteckrichtung des elektrischen Leiters (16) in die Leiterführung (14) bewegbar ist.

4. Isolierring nach einem der vorhergehenden Ansprüche, **dadurch gekennzeichnet, dass** die Leiterführung (14) als ein Schlitz gebildet ist.

5. Isolierring nach einem der vorhergehenden Ansprüche, **dadurch gekennzeichnet, dass** der flexible Arm (20) in einer Wand (40) des Vorsprungs (12) ausgestaltet ist und die Leiterführung (14) mindestens teilweise umschließt.

6. Isolierring nach Anspruch 5, **dadurch gekennzeichnet, dass** die Wand (40) des Vorsprungs eine U-förmige Ausnehmung (42) umfasst, wobei der flexible Arm (20) zwischen den Längsarmen der U-förmigen Ausnehmung (42) gebildet ist.

7. Isolierring nach einem der vorhergehenden Ansprüche, **dadurch gekennzeichnet, dass** der Sensorsitz (22), der der Leiterführung (14) zugewandt ist, eine Sitzfläche umfasst, die mit Bezug auf die Einsteckrichtung des elektrischen Leiters (16) in die Leiterführung (14) geneigt ist.

8. Isolierring nach einem der vorhergehenden Ansprüche, **dadurch gekennzeichnet, dass** der Temperatursensor (24) durch eine formschlüssige Verbindung, eine kraftschlüssige Verbindung im Sensorsitz (22) angeordnet und/oder fest an den Sensorsitz (22) gebondet (44) ist.

9. Isolierring nach einem der vorhergehenden Ansprüche, **dadurch gekennzeichnet, dass** die Höhe des Temperatursensors (24) in einer Richtung senkrecht zur Führungsrichtung der Leiterführung (14) größer ist als eine Tiefe des Sensorsitzes (22).

10. Isolierring nach einem der vorhergehenden Ansprüche, **dadurch gekennzeichnet, dass** der Vorsprung (12) eine erste Ausnehmung (26) und eine zweite Ausnehmung (28) umfasst.

11. Isolierring nach Anspruch 10, **dadurch gekennzeichnet, dass** die erste Ausnehmung (26) und die zweite Ausnehmung (28) im Vorsprung (12) an dessen distalem Ende (30) in Axialrichtung des Isolierrings (10) angeordnet sind.

12. Elektrische Maschine mit einem Stator, der Endwindungen mit mindestens einem elektrischen Leiter (16) umfasst, wobei
ein Isolierring (10) nach einem der vorhergehenden Ansprüche an den Endwindungen angeordnet ist,
das Ende des elektrischen Leiters (16) in der Leiterführung (14) geführt wird und
das Gummiband (36), das um den Vorsprung (12) angeordnet ist, eine Kraft (38) ausübt und den flexiblen Arm (20) in die Richtung der Leiterführung (14) bewegt, wodurch der Temperatursensor (24) gegen den elektrischen Leiter 16 gedrückt wird.

## Revendications

1. Anneau d'isolation (10) pour isoler les enroulements d'extrémité d'un stator d'une machine électrique, comprenant
une partie saillante (12) avec une ouverture d'insertion (18) et un guide conducteur (14), dans lequel une extrémité d'un conducteur électrique (16) peut être insérée à travers l'ouverture d'insertion (18) dans le guide conducteur (14), dans lequel la partie saillante (12) comprend un bras flexible (20) avec un support de capteur (22) sur un côté interne du bras flexible (20) orienté vers le guide conducteur (14), et le bras flexible (20) est au moins partiellement mobile dans une direction du guide conducteur (14), dans lequel l'anneau d'isolation (10) et la partie saillante (12) sont conçus d'un seul tenant,
un capteur de température (24) agencé dans le support de capteur (22) orienté vers le guide conducteur (14), et
une bande de caoutchouc (36) agencée autour de la partie saillante (12) de telle manière qu'elle exerce une force (38) déplaçant le bras flexible (20) dans la direction du guide conducteur (14), dans lequel la bande de caoutchouc (36) est une couche de tube thermorétractable (46).

2. Anneau d'isolation selon la revendication 1, **caractérisé en ce que** la partie saillante (12) est dirigée dans la direction axiale (15) de l'anneau d'isolation (10).

3. Anneau d'isolation selon la revendication 1 ou 2, **caractérisé en ce que** le bras flexible (20) est mobile dans une direction perpendiculaire à la direction d'insertion du conducteur électrique (16) dans le guide conducteur (14).

4. Anneau d'isolation selon l'une des revendications précédentes, **caractérisé en ce que** le guide conducteur (14) est formé comme une fente.

5. Anneau d'isolation selon l'une des revendications précédentes, **caractérisé en ce que** le bras flexible (20) est conçu dans une paroi (40) de la partie saillante (12) entourant au moins partiellement le guide conducteur (14).

6. Anneau d'isolation selon la revendication 5, **caractérisé en ce que** la paroi (40) de la partie saillante comprend un évidement en forme de U (42), dans lequel le bras flexible (20) est formé entre les bras longitudinaux de l'évidement en forme de U (42).

7. Anneau d'isolation selon l'une des revendications précédentes, **caractérisé en ce que** le support de capteur (22) orienté vers le guide conducteur (14) comprend une surface de support inclinée par rapport à la direction d'insertion du conducteur électrique (16) dans le guide conducteur (14).

8. Anneau d'isolation selon l'une des revendications précédentes, **caractérisé en ce que** le capteur de température (24) est agencé dans le support de capteur (22) par une connexion par ajustement de forme, une connexion par ajustement de force et/ou est fermement lié (44) au support de capteur (22).

9. Anneau d'isolation selon l'une des revendications précédentes, **caractérisé en ce que** la hauteur du capteur de température (24) est supérieure à la profondeur du support de capteur (22) dans une direction perpendiculaire à la direction de guidage du guide conducteur (14).

10. Anneau d'isolation selon l'une des revendications précédentes, **caractérisé en ce que** la partie saillante (12) comprend un premier évidement (26) et un second évidement (28).

11. Anneau d'isolation selon la revendication 10, **caractérisé en ce que** le premier évidement (26) et le second évidement (28) sont agencés dans la partie saillante (12) au niveau de son extrémité distale (30) dans la direction axiale de l'anneau d'isolation (10).

12. Machine électrique avec un stator comprenant des enroulements d'extrémité avec au moins un conducteur électrique (16), dans laquelle
un anneau d'isolation (10) selon l'une des revendications précédentes est agencé sur les enroulements d'extrémité,
l'extrémité du conducteur électrique (16) est guidée dans le guide conducteur (14), et
la bande de caoutchouc (36) agencée autour de la partie saillante (12) exerce une force (38) déplaçant le bras flexible (20) dans la direction du guide conducteur (14) pressant le capteur de température (24) contre le conducteur électrique (16).
